Europäisches Patentamt

European Patent Office

Office européen des brevets

(11) Veröffentlichungsnummer: **0 215 284**
A1

# (12) EUROPÄISCHE PATENTANMELDUNG

(21) Anmeldenummer: 86111053.4

(22) Anmeldetag: 09.08.86

(51) Int. Cl.⁴: **B 62 D 53/08**

(30) Priorität: 16.08.85 CH 3536/85

(43) Veröffentlichungstag der Anmeldung: 25.03.87
Patentblatt 87/13

(84) Benannte Vertragsstaaten: BE DE FR IT NL

(71) Anmelder: GEORG FISCHER AKTIENGESELLSCHAFT,
Mühlentalstrasse 105, CH-8201 Schaffhausen (CH)

(72) Erfinder: Jakob, Lothar, Schrotzburgstrasse 11,
D-7702 Gottmadingen (DE)
Erfinder: Tschanz, Hans-Ulrich, Hölzligasse 264,
CH-8447 Dachsen (CH)

(54) Königszapfenanordnung.

(57) Es wird eine Königszapfenanordnung vorgeschlagen, die aus einem tragfähigen Aufnahmeelement (2) besteht, das mit der Aufliegerplatte verbunden ist und in dem ein Königszapfen (3) verstellbar bzw. verschiebbar angeordnet ist. Das Aufnahmeelement (2) weist eine Reihe von Schraubenlöchern auf, entlang welchen der Königszapfen verstellbar ist.

Eine Verstellung des Königszapfens in Längsachse des Sattelaufliegers kommt immer dann in Frage, wenn z.B. Zugmaschinen ausgewechselt werden müssen oder wenn nationale Vorschriften zu einem unterschiedlichen Sattelvormaß führen, was wiederum Kupplungsschwierigkeiten verursacht.

Die vorgeschlagene Anordnung bringt Einsparungen bezüglich des herstellungsmäßigen Aufwandes, eine Reduktion der bisher üblichen Bauhöhe, was zu einer Vergrößerung des Ladevolumens führt, Einfachheit in der Handhabung und eine vielseitige Benutzungsmöglichkeit.

ACTORUM AG

0215284

GEORG FISCHER AKTIENGESELLSCHAFT,        8201 Schaffhausen

Königszapfenanordnung

Die vorliegende Erfindung bezieht sich auf eine Königszapfenanordnung, an einem Sattelauflieger.

Bisher bekannte Ausführungen zeichnen sich dadurch aus,
dass sie am Sattelauflieger in einer fixen Position fest
montiert sind.

So ist z.B. aus der CH-PS 419 856 eine Vorrichtung zur Befestigung eines Königszapfens bekannt geworden, die dadurch
gekennzeichnet ist, dass der Königszapfen an einer Trägerplatte befestigt ist, welche ihrerseits mit den Rahmenträgern fest verbunden ist. Dabei werden zur Erzielung der
geforderten Festigkeitswerte verschiedene Träger mit Rippen
und Versteifungselementen verbunden.

Nachteil dieser Anordnung ist abgesehen vom aufwendigen
Herstellungsverfahren und grossem Materialverbrauch, dass
nur eine einzige fixe Positionierung des Königszapfens vorgesehen ist.

Da 2- bzw. 3-Achszugmaschinen, sowie nationale Vorschriften unterschiedliche Sattelvormasse ergeben, kann die Verbindung einer Zugmaschine mit einem Auflieger zu erheblichen Kupplungsschwierigkeiten führen. Einerseits weil sich der Königszapfen immer am Auflieger befindet, andererseits weil der Abstand zwischen Zugfahrzeug und der Vorderkante des Sattelaufliegers ein bestimmtes Mass nicht unterschreiten darf, da sonst die Manövrierfähigkeit beeinträchtigt wird, hat sich die Anmelderin die Aufgabe gestellt, eine Anordnung zu schaffen, bei der sich die beschriebenen Probleme nicht ergeben.

Die vorgeschlagene Lösung soll zu einer Reduktion des Herstellungsaufwandes, der Bauhöhe der Anordnung führen und eine Flexibilität bringen, weil sich durch kleinere Rasterung enge Verschiebestellungen ergeben, so dass unterschiedliche Auflieger mit unterschiedlichen Zugmaschinen einfach und schnell, innerhalb verschiedener Toleranzen, kombinierbar sind. Trotz der Einfachheit der Konstruktion soll die vorgeschlagene Anordnung den rigorosen Belastungen während des Fahrtbetriebes standhalten.

Diese Aufgabe wird erfindungsgemäss durch die kennzeichnenden Merkmale des Anspruches 1 gelöst.

Weitere vorteilhafte Ausgestaltungen ergeben sich aus den abhängigen Ansprüchen.

Anhand der beigelegten Zeichnung wird ein bevorzugtes Ausführungsbeispiel näher erläutert:

Es zeigt:

Fig. 1      eine Draufsicht auf eine erfindungsgemässe
Anordnung und

Fig. 2      eine Ansicht in Richtung A der
Fig. 1.

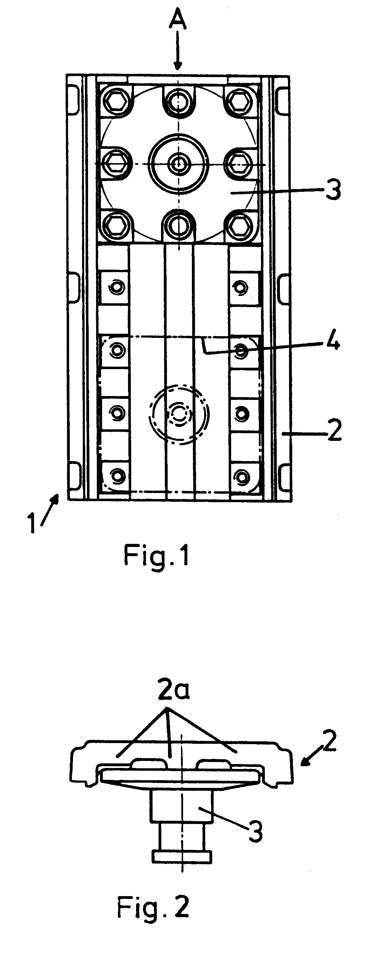

Die Königszapfenanordnung 1 weist ein Aufnahmeelement 2
und einen darin angeordneten Königszapfen 3 auf. Das Aufnahmeelement 2 ist an sich ein modifizierter Aufnahmeteller
für den Königszapfen mit kleiner Rasterung, der eine unterschiedliche Positionierung und enge Verschiebestellungen
des Zapfens 3 erlaubt, je nachdem ob man eine 2- oder 3-
achsige Zugmaschine zur Verfügung hat. Die einzelnen Bereiche des Aufnahmeelementes 2 sind profilförmig 2a ausgestaltet, so dass die Leichtbauweise gewahrt wird, aber
trotzdem den geforderten Festigkeiten Rechnung getragen
wird. Die Verschiebung des Königszapfens 3 erfolgt in
Längsrichtung des Sattelaufliegers. Das Aufnahmeelement 2
wird am Sattelauflieger befestigt. Wegen der einfachen
Formgestaltung eignet es sich besonders gut für eine Befestigung an der Aufliegerplatte. Die vorgeschlagene
kastenförmige Ausführung des Aufnahmeelementes 2 (Fig. 2)
bringt jene Steifigkeit, die keine Membranbewegung mehr
zulässt. Das ist sehr wichtig bei den im Fahrbetrieb auftretenden Belastungen.

Der Befestigungsflansch des Königszapfens 3 kann viereckig
oder rund sein und wird im Aufnahmeelement 2 befestigt.

Entlang des Aufnahmeelementes sind eine ganze Reihe von
Schraubenlöchern vorgesehen, die eine Rasterung ergeben,
so dass jede Art von Einstellung bzw. Verstellung, besonders enge und Feinverschiebeeinstellungen, des Königszap-

- 4 -

fens 3 möglich sind. Die viereckige Ausführung des Befestigungsflansches 4 des Königszapfens bringt auch noch
zusätzliche Vorteile. Die in den Eckbereichen angeordneten
Schrauben weisen einen längeren Hebelarm bezüglich der
übrigen Schrauben auf, so dass den grossen am Königszapfen
angreifenden Belastungen besser entgegengewirkt werden kann.

- 5 -

P a t e n t a n s p r ü c h e

1. Königszapfenanordnung an einem Sattelauflieger, dadurch
   gekennzeichnet, dass sie ein tragfähiges Aufnahmeelement
   aufweist, das mit dem Auflieger verbindbar ist, wobei im
   Aufnahmeelement mindestens ein Königszapfen verstellbar
   bzw. verschiebbar angeordnet ist.

2. Anordnung nach Anspruch 1, dadurch gekennzeichnet, dass
   das Aufnahmeelement kastenförmig ausgebildet ist, wobei
   die kastenförmige Ausbildung durch das Zusammenwirken
   von profilförmigen Formgebungen erzeugt ist.

3. Anordnung nach Anspruch 1, dadurch gekennzeichnet, dass
   der Königszapfen entlang der Längsachse des Aufnahmeelementes verschiebbar ist.

4. Anordnung nach Anspruch 1, dadurch gekennzeichnet, dass
   das Aufnahmeelement an der Aufliegerplatte angeschweisst,
   angeschraubt oder angeklebt ist.

5. Anordnung nach Anspruch 1, dadurch gekennzeichnet, dass
   der Befestigungsflansch des Königszapfens viereckig ist.

- 6 -

6. Anordnung nach Anspruch 1, dadurch gekennzeichnet, dass die Gleitfläche des Aufnahmeelementes profilförmig ausgebildet ist.

7. Anordnung nach Anspruch 1, dadurch gekennzeichnet, dass das Aufnahmeelement geschmiedet oder gegossen ist.

8. Anordnung nach einem der Ansprüche 1 bis 7, dadurch gekennzeichnet, dass das Aufnahmeelement aus Stahlblech oder Kunststoff gefertigt ist.

0215284

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 418 138 (DORSEY)<br>* Insgesamt * | 1-6 | B 62 D 53/08 |
| | --- | | |
| X | US-A-2 889 154 (DE LAY)<br>* Abbildungen 2,3; Spalte 1, Zeilen 40-42; Spalte 2, Zeilen 17-64 * | 1-4,6 | |
| | --- | | |
| X | US-A-3 198 548 (LUND)<br>* Spalte 1, Zeilen 10,39-43; Spalte 2, Zeile 32 - Spalte 3, Zeile 34; Abbildungen 2-4 * | 1-4,6 | |
| | --- | | |
| X | US-A-3 254 903 (RODNEY)<br>* Abbildungen 4,5 * | 1 | |
| | --- | | **RECHERCHIERTE SACHGEBIETE (Int. Cl.4)** |
| X | AU-B- 457 070 (LOADMASTER TRAILERS PTY.)<br>* Seite 9, Abbildungen * | 1 | B 62 D 53/08 |
| | ----- | | |

Der vorliegende Recherchenbericht wurde für alle Patentansprüche erstellt.

| Recherchenort<br>DEN HAAG | Abschlußdatum der Recherche<br>01-10-1986 | Prüfer<br>SCHMAL R. |
|---|---|---|